# EUROPEAN PATENT SPECIFICATION

(11) **EP 0 376 010 B1**
(45) Date of publication and mention of the grant of the patent: **02.11.1995**
(21) Application number: 89122513.8
(22) Date of filing: 06.12.1989
(51) Int. Cl.: B29C 70/68, B29C 43/18, B32B 31/20

(54) **Method of manufacturing a coated, molded laminate automobile or vehicle body part**
Verfahren zur Herstellung eines beschichteten, laminierten Kraftwagen- oder Fahrzeugteils
Procédé de fabrication d'une pièce laminée revêtue pour une automobile ou un véhicule

(30) Priority: 22.12.1988 US 288330
(43) Date of publication of application: 04.07.1990
(73) Proprietor: BASF Corporation, Clifton, New Jersey 07015-6001 (US)
(72) Inventor: Mc Sweeney, Stephen M., Farmington Michigan 48024 (US)
(74) Representative: Münch, Volker, Dr.

(56) References cited:
- EP-A- 0 256 499
- DE-A- 2 343 161
- US-A- 2 331 546
- US-A- 3 774 428
- RESEARCH DISCLOSURE, No. 24303, July 1984, page 304; ANONYMOUS: "A method for obtaining prepainted parts using a painted carrier film"

## Description

### Technical Field

The field of art to which this invention pertains is coated plastic-metal laminate structures, in particular, laminate structures having an exterior coating.

### Background of the Invention

The automotive industry is an ever-changing, dynamic industry. Change is dictated by many factors including styling, consumer preference, safety factors, technological and engineering improvements, and government regulations.

Presently the exterior skin of most automotive bodies is manufactured from coiled steel which is precision stamped into particular body components such as fenders, door panels and the like. These components are assembled to the frame or welded together to form a unibody "in white" which is then subjected to numerous metal treating and coating procedures to produce finally a glamorous topcoated body for final assembly.

The above-mentioned metal treating and coating processes are complicated, technically demanding, and generally ill-suited for an automotive mechanical assembly plant. As a result, it is widely accepted that approximately 40% or more of the usable floor space of the assembly plant must be dedicated to the metal finishing processes and that 40% of the cost of assembling the car is attributable to these processes. In addition, the present metal finishing processes impose serious problems of dealing with various chemicals and large quantities of flammable materials; hazardous waste disposal; and compliance with air emission standards; as well as the waste of nearly half of the paint solids due to the poor efficiency of painting a car shell.

At the same time there has been a continuing incentive to replace metal body parts with plastic in order to lighten the vehicle and improve fuel efficiency, reduce component rusting, and to economically produce more short-run models. Toward these ends "space frame" construction, as used in the Pontiac Fiero automobile, was developed in order to allow the use of non-loadbearing plastic body skins and to facilitate inexpensive model changes.

Unfortunately, the painting of plastic exterior body parts suffers from most of the problems associated with painting metal and adds many new problems peculiar to finishing plastic. Among these problems are: difficulties in matching color, distinctness of image, and gloss among the various types of metallic and plastic substrates on the body; solvent blowouts in the topcoat; glass fiber pattern print-through; telegraphing of adhesive bondlines; loss of substrate impact strength owing to attack by paint solvents; deformation of the parts during the paint bake cycle; and more.

There have been several attempts to eliminate the painting process in various assembly operations by manufacturing preformed, precoated metal parts. U.S. Patent No. 2,331,546 discloses a process for manufacturing pre-coated automobile body parts. The process consists of priming flat steel plate with a dull enamel by roller coating, and then baking; next, an outer top coat of an enamel is applied by roller coating, and the enamel is cured. The coated steel plate is cut to shape and die formed. The enamel contains a flexibilizing binder to protect it during the forming process. The automotive body part is described as having an automotive quality finish.

U.S. Patent No. 3,774,428 discloses a process for manufacturing siding or roofing material for buildings. The process comprises painting coiled aluminum and then dye forming the aluminum to produce a surface pattern simulating the appearance of wood. Plastic material is then injected onto the interior surface of the metal stock to form a siding material.

EP-A-256 499 discloses a method of preforming a cover for a can. The cover is used for a can-shaped container such as a can for various beverage or canned food container or other similar containers.

It is known that the De Lorean automobile was designed with the thought of attempting to control production costs by eliminating the coating and treatment operations. This was done by using body parts comprising a plastic-stainless steel corrosion resistant structure, wherein the outer surface of the body part was stainless steel which did not require painting or coating. The plastic-stainless steel structure of the De Lorean automobile is disclosed in U.S. Patent No. 4,382,626.

None of the cited approaches have been successful in eliminating the coating process in the assembly plant while continuing to offer the traditional selection of glossy color finishes. What is needed in this art is a method of moving the automotive painting process out of the assembly plant and into a tightly-controlled and material-efficient environment.

### Disclosure of the Invention

A method of manufacturing a coated, molded laminate automobile or vehicle body part is disclosed. The method comprises coating at least one side of a coiled metal substrate with at least one coating selected from the group consisting of primer coatings, pigmented top coat coatings, pigmented base coat coatings, intermediary coatings and clear outer top coat coatings. Then the coated, coiled metal is cut into pieces, and, the coated pieces are formed into coated veneers. The veneers have an outer surface and an inner surface. Then, an inner substrate having a shape that conforms to the shape of the veneer is simultaneously molded in situ and bonded to the inner surface of the veneer. The resulting laminate article coating having high gloss, distinctness of image and durability and is suitable for use in an assembly operation.

Coated, molded laminate automobile or vehicle body parts prepared by the method according to the present invention comprise an outer, coated metal veneer and an inner molded, plastic substrate. The metal veneer is formed from coated, coiled metal. The veneer has an inner surface and an outer surface. At least one surface of the veneer is coated with at least one coating selected from the group consisting of inner primer coatings, pigmented top coat coatings, pigmented base coat coatings, intermediary coatings and clear top coat coatings. The inner, underlying molded plastic substrate is simultaneously molded and bonded to the inner surface of the coated metal veneer. The substrate substantially conforms to the shape of the veneer. The resulting laminate article has a coating having high gloss, distinctness of image and durability and is suitable for use in an assembly operation.

The foregoing, and other features and advantages of the present invention will become more apparent from the following description.

### Brief Description of The Drawing Figures

- FIGURE 1: Shows an embodiment of the laminated automobile or vehicle body parts prepared by the method of the present invention.
- FIGURE 2: is a magnified view of a partial cross section of a coated automobile or vehicle body part prepared by the method of the present invention.
- FIGURE 3: is a flow diagram of a typical process according to the present invention.

### Best Mode For Carrying Out The Invention

The metal veneer (also referred to as "metal skin") used in the method according to the present invention will typically comprise commercially available coiled metals such as aluminum, stainless steel, mild steel, copper, and brass. The criteria for selecting the metal will include resistance to corrosion, as for example with aluminum and stainless steel, and also the ease with which the coiled metal can be formed into a structural article. In addition, the metal chosen for a particular part will depend upon other parameters such as cost, ease of coating, and the end properties required of a laminate article produced from a metal veneer.

It is particularly preferred to use aluminum. The thickness of the coiled metal will vary with the metallurgical nature of the particular metal, as well as the nature and requirements of a finished laminated article or part.

The materials which are used to form the underlying substrate structure of the metal veneer laminated part will preferably comprise any plastic compound which can be easily molded and bonded to the metal veneer. Plastics which can be used include sheet molding compounds or bulk molding compounds consisting of resins such as polyester, epoxy, phenolic and the like. It can be appreciated that any moldable or formable materials, including resin impregnated fiber materials, can be used to form the underlying substrates of the laminated articles of the present invention. The materials include such things as foams and sandwich materials. The selection of a particular material will vary with the particular manufacturing or molding process employed. Economic, engineering, and design considerations will also be critical in the selection of the particular underlying substrate material.

The coiled metal used to form the veneer will be coil coated with various coatings. The coatings utilized will be selected from the categories: metal pretreatments and/or adhesion promoters, which may be applied to one or both surfaces of the metal skin to improve adhesion of paint to skin and/or skin to substrate; automotive grade primers; automotive grade enamels; automotive grade, high tech glamour coatings, such as pigmented inner base coat/clear outer top coat systems; and protective stripable (i.e., removable) coatings.

The metal pretreatment coatings typically comprise cleaning solvents, aqueous detergents, phosphating or chromating agents, rinses and the like conventionally used in this art.

The adhesion promoting coatings will typically comprise organosilanes, epoxies and the like conventionally used in this art.

These coating compositions are presently used in the art and include the following types of film-forming compounds: urethanes, acrylics, polyesters, alkyds, and the like. Of high importance among the criteria for selection of a particular primer, top coat coating system, or coating, will be ability of the coating to withstand deformation and marring during the forming process. This is accomplished by proper selection of the polymers and other components used to formulate the coatings. Although coatings presently used in the art such as urethanes, acrylics. polyesters, alkyds and the like will be useful, formulation modifications may be required. Coatings that dry to removable outer films may be applied over the coatings used on the veneers and articles of the present invention. These coatings will typically comprise filled and plasticized vinyls, acrylic emulsions, or solution polymers.

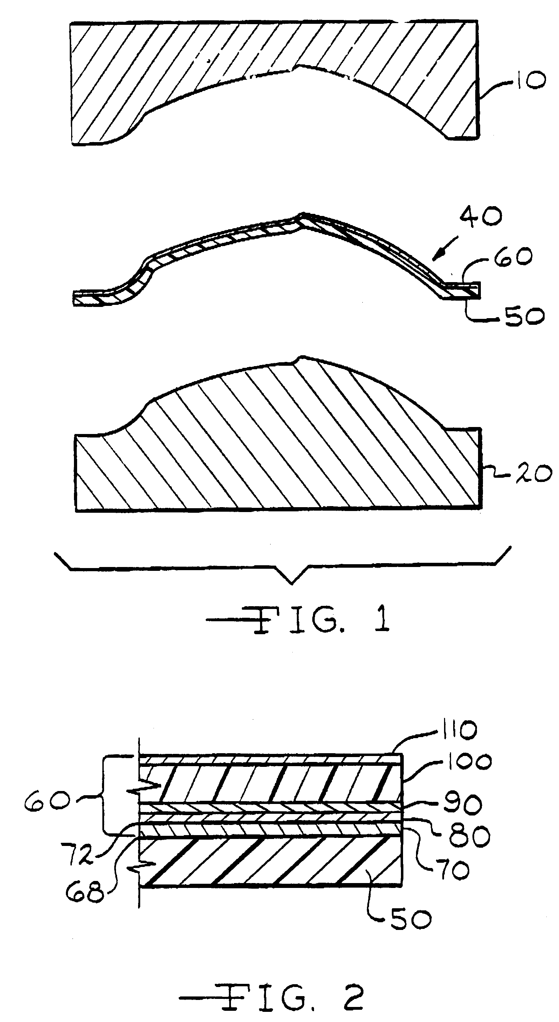

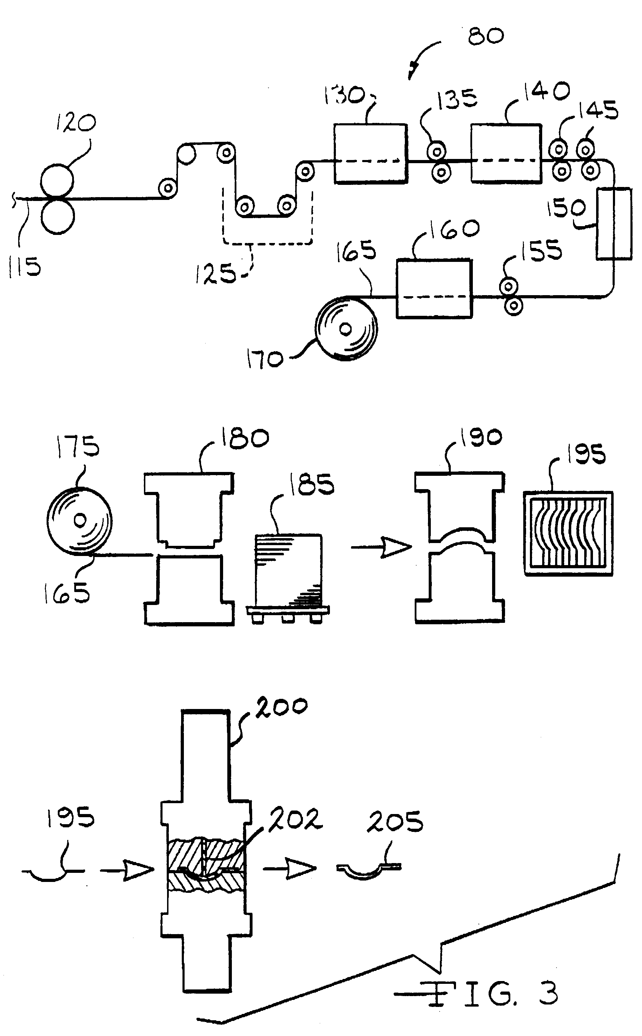

Referring to Figure 3, there is shown a flow diagram showing a typical process according to this invention. Referring to this diagram, the process is initiated by feeding a continuous band of metal coil stock **115** into coil coating means **180** via feed means **120**. Coil stock is pretreated in pretreatment means **125** with a conventional pretreatment such as a phosphating treatment solution. Pretreated coil stock **115** is then moved to oven **130** where pretreated coil stock **115** is dried. Coil stock **115** then moves to primer application means **135** where a coating of a primer is applied. The primed coil stock **115** is them moved to oven **140** where the primer coating is cured or dried. The primed coil stock is then moved to coating means **145** where a top coat is applied over the primer coat. The top coat preferably consists of a pigmented inner base coat and a clear outer top coat applied over the pigmented base coat. The top coated coil stock **115** then is moved to oven **150** where the base coat and the clear outer top coat are cured by baking at sufficient heat for a sufficient time. Then the top coated coil stock **115** is optionally moved to protective coating application means **155** where an optional, strippable, protective coating is applied over the top coated coil stock. The coil stock **115** is then moved to oven **160** where the protective coating is cured or dried. The coated coil stock **165** is then moved to coiling means **170** where it is rewound.

Coated coil stock **165** is moved to unwinding feed means **175**. The unwound coated coil stock **165** is fed to cutting means **180** where it is cut into coated blanks **185**. Coated blanks **185** are fed into die forming means **190** where the blanks are stamped into formed coated veneers **195**.

The formed coated veneers **195** are then inserted in molding means **200** where plastic, injected through gate **202**, is simultaneously molded and bonded to the inner surface of coated veneer **195** thereby forming coated metal-plastic laminate article **205**. In an alternative embodiment, utilizing compression molding, gate **202** is absent.

The coil coating process is a process which is well known in the art. Typically, coils of metal are fed into an apparatus which continuously feeds the stock at a metered rate into a paint application means. The paints or coatings can be applied by brushing, rolling, spraying and other application processes known in the art. Once the initial, optional adhesion promoter coating, or coatings, have been applied to the bare metal surface of the coil stock, the coated metal stock then is moved to a curing or baking means where the adhesion promoter is cured. Upon exiting the curing means, a primer is optionally applied over the adhesion promoter and the primed coil stock is then moved to a curing means. Upon exiting the curing means, the base coat/clear top coat is applied as an outer finish coating on at least one surface of the coiled metal. This is accomplished by applying at least one layer of a thin, pigmented base coat directly over the primer coating, followed by at least one layer of a clear outer top coat. Although it should be once again noted that the primer coating is optional and the base coat/clear top coat may be applied over bare metal substrate or over the optional adhesive coating.

The coil stock then moves to a curing means for the base coat/clear coat coating. Next an optional removable, protective coating may be applied. Then, as the coated metal stock exits the final curing means, it is rewound. After an entire coil has been coated, the rewound coated stock is removed from the apparatus and is then available for forming metal veneer laminate articles.

The coiled metal has an optional primer and an overcoat comprising a "high tech", "glamour" base coat/clear coat. Although a base coat/clear top coat coating is preferable for appearance, certain applications may require pigmented top coats, such as pigmented automotive or appliance enamels. In general, the coatings are characterized as having high gloss and distinctness of image, durability, and excellent color appearance. The coatings may contain metal pigments or coated mica pigments. The term "base coat/clear coat" is defined to include multilayer coatings, as in U.S. Patents Nos. 4,549,020 and 4,615,940 which are incorporated herein by reference, as well as pigmented coatings.

The advantages of using a coil coating operation are many. Paint film-builds and appearance are uniform throughout a manufacturing run employing a single lot of paint. There is virtually no loss of paint, in contrast to typical automotive spray painting operations where overspray losses amount to about 45% or more of the paint sprayed. The coil coating operation is carried out in a relatively small, contained space, allowing strict control of flammables and pollutants as well as the use of advanced paint chemistries not practicable in open areas (hand-spraying operations) occupied by personnel, owing to the noxious components involved. Moreover, the closed, coil coat painting system practically eliminates the airborne dirt deposits which plague the usual automotive paint line.

There are a variety of processes which can be used to mold coated veneer metal. Initially the coated, coiled metal is cut into pieces according to the size of the part desired. This is accomplished in conventional die cutting apparatuses and means. Next, a cut piece is inserted into a die forming apparatus and formed under sufficient force to produce a contoured article, which is referred to as a coated veneer, having the desired dimensions and contours. The die will be a typical, conventional die forming apparatus having a cavity with male and female forming parts. There are many forming processes known in the art for forming metal articles. The processes include flexible die forming sheet and plate processes such as the Guerin process, the Verson-Wheelon process, the Marform process, the Hydroform process, and other similar processes which permit the die forming of a metal sheet into a metal part having a complex, contoured shape. The coated metal veneer after forming will have the desired shape and contour of a particular body part and will also have an automotive grade finish.

The next step in the process is to simultaneously mold and bond the underlying plastic substrate to the outer, coated metal veneer.

In order to accomplish this step, the preformed skin is positioned in a plastic molding means or apparatus, the plastic material being introduced and bonded to the unpainted side of the skin, and after a suitable curing or cooling period, the completed part released from the mold ready for secondary operations and attachment to the chassis.

A variety of plastic molding processes can be used to produce the veneer coated body skin. They fall into two broad categories: compression molding and injection molding. Among the variety of suitable compression molding processes are SMC and BMC molding as well as ERM (Elastic Reservoir Molding) and wet mat or preform molding. Among the suitable injection molding processes are those employing common thermoplastics such as polypropylene, ABS, PVC, and the like; those employing thermoset plastics such as RIM or RRIM; and those employing engineering thermoplastics such as polycarbonate, PPO, the many alloys, and the like.

An embodiment of the molded article of the present invention is shown in Figure 1. The article **40** is shown between female molding means **10** and male molding means **20**. Article **40**, as it comes out of the molding means **10** and molding means **20**, is shown to have an outer coated veneer **60** and an inner molded substrate **50**. Inner molded substrate **50** is bonded to veneer **60** and conforms to the shape of veneer **60**. A magnified section of article **40** is illustrated in Figure 2. Article **40** is seen to comprise metal veneer **60** and underlying plastic substrate **50** which is bonded to veneer **60**. Veneer **60** consists of metal substrate **70** having top surface **72** and inner surface **68**. Optional primer coating **80** is on top surface **72** of metal substrate **70**. Pigmented base coat **90** covers primer coating **80**. Clear top coat **100** is on top of pigmented base coat **90**. Optional protective coating **110** is over clear coat **100**. Plastic substrate **50** is bonded to surface **68** of metal veneer **60** to form the plastic-metal laminate part **40**.

The following examples are illustrative of the principles and practice of this invention, although not limited thereto. Parts and percentage where used are parts and percentages by weight.

### EXAMPLE 1

Coated veneer articles of the present invention were prepared. The general procedure used to prepare these veneer structures is as follows:
A. Using a standard automotive paint styling panel for a master model, a simple filled epoxy compression mold was constructed with the cavity duplicating the shape of the styling panel. The guide pins of the mold were shimmed with 1/8" (0.32 cm) thick washers to establish the cavity depth. Both surfaces of the cavity were well waxed with a carnauba based automobile wax to provide good part release.
B. Sheets of standard, pre-primed aluminum, 8" x 19" x 0.025" (20.3 cm x 48.3 cm x 0.064 cm) paint panel stock were coated with 0.8-1.0 mil (0.002-0.003 cm) of a metallic automotive basecoat and 1.5-2.0 mils (0.004-0.005 cm) of either a rigid or a flexible automotive clearcoat using conventional airspray equipment. The primer was a flexible automotive primer UO4KD004 manufactured by BASF Corporation, Troy, Michigan. The base coat comprised a flexible coating manufactured by BASF Corporation. The coating comprised a flexible polyester resin and a urethane prepolymer crosslinking agent. The clearcoat was also a similar flexible coating manufactured by BASF Corporation. After the topcoat was baked, approximately 2 mils (0.005 cm) of a strippable waterborne maskcoat (protective outer coating) was applied by conventional airspray and dried 5 minutes at 180°F (82°C).
C. A painted aluminum sheet from Step B was positioned, painted side down, on the cavity half of the mold. The mold was closed and pressured thus forming the painted aluminum sheet to the shape of the cavity. The mold was opened and the formed, painted aluminum-now called a "veneer" - was removed and set aside.
D. Eight 9" x 20" (22.9 cm) pieces of 3/4 ounce/ft² (229.3 g/m²) chopped fiberglass mat were cut and their total weight determined.
E. Sufficient general-purpose, prepromoted unsaturated polyester resin (Polyester resin 25-204 and polyester catalyst 26-216 from Polyproducts Corporation, Detroit, Michigan) was weighed out to provide a 30 minute working life. The hardener was blended into the resin with through mixing.
F. On a flat benchtop, the fiberglass mat was impregnated with catalyzed polyester resin, one piece at a time, and the pieces compacted into an eight ply laminated. A short knapped paint roller was used to do the impregnation, air removal, and compaction.
G. With the male half of the mold down, the wet laminate was positioned on the mold and the veneer placed over it paint side up. The mold was closed and pressured until excess polyester flowed out and the cavity half bottomed out on the shim washers. Pressure was maintained on the mold until the laminate was hard. The mold was then opened and the coated veneer part removed. A short oven postcure was given until the laminate developed full hardness.
H. The excess laminate was trimmed from the edges of the part and the protective coating removed from the painted surface to produce a completed coated, plastic-metal laminate. The gloss and distinctness of image of the article were excellent, and there was no cracking of the coatings.

### EXAMPLE 2

Using a conventional coilcoating machine, both sides of aluminum coilstock (0.015" thick, 0.038 cm) receive a 0.0002" (0.001 cm) coating of an acrylic functional, silane adhesion promoter and are dried at a temperature of about 200°C in an oven stage. At the next stage of the coil coating process, a 0.001" (0.003 cm) coating of a flexible automotive grade primer comprising UO4KDOO4 primer manufactured by BASF Corporation, Coatings and Inks Division, Southfield, Michigan is applied to the outer side of the coil stock which passes through a solvent flashoff stage and then to an oven stage where it is baked. The coil stock next proceeds through a chiller stage to the next coating stage where a 0.0008" (0.002 cm) coat of flexible, metallic inner basecoat comprising flexible polyol-urethane prepolymer, pigments, additives and solvents is applied over the primer coating. The coil stock passes through a solvent flashoff chamber and then to the next stage where 0.002" (0.005 cm) of flexible automotive clear outer top coat comprising essentially the same materials as the basecoat except for pigments is applied. The coil stock passes through a flashoff chamber and then to an oven where the basecoat/clearcoat is baked. The coated coil stock then passes to the strippable maskcoat applicator where it receives a 0.005" (0.013 cm) coat of strippable maskcoat coating comprising filled and plasticized vinyl or acylic emulsion or solution polymers and passes a dryoff chamber. The coated coilstock is then rewound on a core and the rolls are removed from the coilcoating apparatus when they are of a suitable size.

Next, properly shaped and sized blanks are punched from the coated coilstock using a conventional die punching apparatus and tools. Then the blanks are pressed in a conventional forming die where on into coated metal veneers having the shape of an automobile hood.

### EXAMPLE 3

The coated veneer of Example 2 is placed painted face down in the cavity half of a conventional heated compression molding apparatus designed to mold the automobile hood. A properly sized and shaped SMC charge is loaded into the cavity on top of the veneer. The mold is closed and, under sufficient heat and pressure, the SMC flows to fill the mold and achieve intimate contact and bond with the treated aluminum surface of the skin. After 1 minute at 350°F (177°C), the mold is opened and the laminate part is ejected and allowed to cool. Secondary trimming, hole cutting, and hardware installation operations may now be performed as required by the design. At this point a fully-finished, automotive quality, laminate body part has been produced and is ready for mechanical assembly in an assembly plant to the auto chassis. The part has an automotive quality coating.

### EXAMPLE 4

The coated veneer skin of Example 2 is secured in the cavity of an injection mold apparatus which is then closed. Mixed RRIM urethane is injected into the cavity and, after sufficient cure has been attained, a coated, laminated article is removed from the mold. Secondary operations are performed and the resulting laminate article has a fully-finished automotive quality coating and ready for assembly as a finished body part to an automobile chassis in an assembly plant.

## Claims

1. A method of manufacturing a coated, molded laminate automobile or vehicle body part comprising
(a) coating at least one side of a coiled metal substrate (115) with at least one coating selected from the group consisting of primer coatings (135, 140, 80), pigmented top coat coatings (145, 150), inner pigmented base coat coatings, intermediary coatings and outer clear top coat coatings (145, 150, 90, 100);
(b) cutting the coated, coiled metal (165) into pieces in a cutting means (180, 185);
(c) forming the coated, coiled metal pieces into coated veneer in a die forming means (185, 190, 195) the veneers having an outer coated surface and an inner surface (68); and,
(d) simultaneously molding in a molding means (200) an inner substrate having a shape that conforms to the shape of the veneer, and bonding the inner molded substrate (50) to the inner surface of the metal veneer.

2. The method of claim 1 wherein the coiled metal substrate comprises aluminum.

3. The method of claim 1 wherein an adhesion promoting coating is applied to at least one side of the coiled metal substrate prior to the application of a coating.

4. The method of claim 1 wherein a removable protective coating is applied over at least one side of the coated metal prior to cutting.

## Patentansprüche

1. Verfahren zur Herstellung eines beschichteten, geformten laminierten Automobil- oder Fahrzeugkarosserieteils, bei dem man
(a) mindestens eine Seite eines Bandmetallsubstrats (115) mit mindestens einer aus der aus Grundierungen (135, 140, 80), pigmentierten Decklacken (145, 150), inneren pigmentierten Unterlackierungen, Zwischenschichten und äußeren Klardecklacken (145, 150, 90, 100) bestehenden Gruppe ausgewählten Beschichtung beschichtet,
(b) das beschichtete Bandmetall (165) in einer Schneidvorrichtung (180, 185) in Stücke schneidet,
(c) die beschichteten Bandmetallstücke in einer Gesenkformungsvorrichtung (185, 190, 195) zu beschichteten Furnieren formt, wobei die Furniere eine beschichtete Außenfläche und eine Innenfläche (68) besitzen, und
(d) gleichzeitig in einer Formungsvorrichtung (200) ein inneres Substrat einer derjenigen des Furniers entsprechenden Gestalt formt und das innere geformte Substrat (50) mit der Innenfläche des Metallfurniers verklebt.

2. Verfahren nach Anspruch 1, worin das Bandmetallsubstrat aus Aluminium besteht.

3. Verfahren nach Anspruch 1, worin man vor dem Aufbringen einer Beschichtung auf mindestens eine Seite des Bandmetallsubstrats einen Haftvermittler aufbringt.

4. Verfahren nach Anspruch 1, worin man vor dem Schneiden eine entfernbare Schutzschicht auf mindestens eine Seite des beschichteten Metalls aufbringt.

## Revendications

1. Procédé de fabrication d'une pièce de carrosserie stratifiée, moulée, revêtue, d'automobile ou de véhicule, comprenant les étapes qui consistent à
(a) revêtir au moins une face d'un substrat de métal en bobine (115) d'au moins un revêtement choisi dans le groupe constitué par les revêtements de primaire (135, 140, 80), les revêtements de couche finition pigmentés (145, 150), les revêtements de couche de base pigmentés internes, les revêtements intermédiaires et les revêtements de couche de finition transparents externes (145, 150, 90, 100);
(b) découper le métal en bobine, revêtu (165), en morceaux dans un dispositif de découpe (180, 185);
(c) façonner les morceaux de métal en bobines, revêtus, sous forme de placage revêtu dans un dispositif de formage à coquille (185, 190, 195), les placages possédant une surface revêtue externe et une surface interne (68); et
(d) mouler simultanément, dans un dispositif de moulage (200), un substrat interne ayant une forme épousant la forme du placage, et coller le substrat moulé interne (50) à la surface interne du placage métallique.

2. Procédé selon la revendication 1, dans lequel le substrat de métal en bobine comprend de l'aluminium.

3. Procédé selon la revendication 1, dans lequel un revêtement favorisant l'adhérence est appliqué sur au moins une face du substrat de métal en bobine avant l'application d'un revêtement.

4. Procédé selon la revendication 1, dans lequel un revêtement protecteur éliminable est appliqué sur au moins une face du métal revêtu avant le découpage.
